# EUROPÄISCHE PATENTANMELDUNG

(11) **EP 4 467 839 A1**
(43) Veröffentlichungstag der Anmeldung: **27.11.2024**
(21) Anmeldenummer: 24169948.7
(22) Anmeldetag: 12.04.2024
(51) Int. Cl.: F16F 15/16, F16F 15/167, F16F 15/173, F16J 3/04, F16J 15/52

(54) **DREHSCHWINGUNGSDÄMPFER**

(30) Priorität: 26.05.2023 DE 102023113991
(71) Anmelder: Hasse & Wrede GmbH, 12681 Berlin (DE)
(72) Erfinder: STEIDL, Michael, 10318 Berlin (DE); BOHMEYER, Stephan, 15366 Hoppegarten (DE); REINSPERGER, Norbert, 15366 Hoppegarten (DE); WILLEKE, Sebastian, 15366 Hoppegarten (DE)
(74) Vertreter: Specht, Peter

(57) **Zusammenfassung**

Ein Drehschwingungsdämpfer (1) mit einem auf einer Antriebswelle eines Motors befestigbaren Nabenteil (2) (Primärmasse) und einem das Nabenteil (2) im radial äußeren Bereich umfassenden Schwungring (3) (Sekundärmasse), wobei zwischen Nabenteil (2) und Schwungring (3) ein mit einem Fluid gefüllter Spalt (4) und eine oder mehrere Dichtungseinrichtungen (5) vorgesehen sind, mittels derer das Austreten des Fluids vermieden werden soll, wobei die Dichtungseinrichtung oder die Dichtungseinrichtungen (5) jeweils einen ersten, mit dem Nabenteil (2) verbundenen Ring (6) sowie jeweils einen mit dem Schwungring (3) verbundenen zweiten Ring (7) sowie jeweils ein Dichtungselement (12, 12', 12", 12"') aus einem Kunststoff aufweisen, welches jeweils einerseits abdichtend zwischen dem ersten Ring (6) und dem Nabenteil (2) und jeweils andererseits mit dem zweiten Ring (7) und dem Schwungring (3) angeordnet ist, wobei das Dichtelement (12, 12', 12", 12"') zwischen den miteinander verbundenen Bauteilen, also dem ersten oder zweiten Ring (6 oder 7) und dem jeweils zugeordneten Schwungring (3) oder Nabenteil (2) verklemmt angeordnet ist.

## Beschreibung

Die vorliegende Erfindung betrifft einen Drehschwingungsdämpfer nach dem Oberbegriff des Anspruchs 1 oder 13.

Ein gattungsgemäßer Drehschwingungsdämpfer ist aus der DE 10 2020 118 066 A1 bekannt. Zum technologischen Hintergrund wird ferner die GB 11 05 292 A und die WO2018/019729 A1 genannt.

Die gattungsgemäßen Drehschwingungsdämpfer weisen einen nach außen versetztem Schwungring auf, was ihre Bauart von Konstruktionen unterscheidet, bei welchen der Schwungring komplett in einem separaten Gehäuse gekapselt gelagert ist.

Die DE 10 2020 118 066 A1 weist sodann Drehschwingungsdämpfer mit einem auf einer Antriebswelle eines Motors befestigbaren Nabenteil und einem das Nabenteil im radial äußeren Bereich umfassenden Schwungring auf. Zwischen dem Nabenteil und dem Schwungring ist ein mit einem Fluid gefüllter Spalt und zumindest eine Dichtungseinrichtung angeordnet, mittels welcher das Austreten des Fluids vermieden werden soll.

Die Dichtungseinrichtungen weisen jeweils einen ersten, mit dem Nabenteil dicht verbundenen Ring, nachfolgend als Innenring bezeichnet, sowie jeweils einen mit dem Schwungring dicht verbundenen zweiten Ring, nachfolgend als Außenring bezeichnet, auf. Weiter weist die Dichtungseinrichtung jeweils ein Dichtungselement aus einem Elastomer auf, welches jeweils einerseits abdichtend mit dem Innenring und jeweils andererseits mit dem Außenring insbesondere durch Vulkanisierung verbunden ist. Das Dichtelement wird dabei auf unterschiedlichen Höhen verschweißt.

Die vorbeschriebene Lösung hat sich grundsätzlich bewährt. Allerdings ist die Bereitstellung der vorbeschriebenen Kunststoff-Metall-Dichtung, insbesondere Elastomer-Metall-Dichtung mit der entsprechenden Festigkeit im Bereich der Drehschwingungsdämpfer mit einem erhöhten Kostenaufwand verbunden.

Die vorliegende Erfindung setzt daher bei der Aufgabe an eine kostenoptimiertere Variante mit den Vorteilen der DE 10 2020 119 066 A1 zu schaffen.

Die Erfindung löst diese Aufgabe durch das Bereitstellen eines Drehschwingungsdämpfers mit den Merkmalen des Anspruchs 1 oder alternativ mit den Merkmalen des Anspruchs 13.

Ein erfindungsgemäßer Drehschwingungsdämpfer ist mit einem auf einer Antriebswelle eines Motors befestigbaren Nabenteil als Primärmasse) und einem das Nabenteil im radial äußeren Bereich umfassenden Schwungring als Sekundärmasse ausgebildet.

Zwischen dem Nabenteil und dem Schwungring sind ein mit einem Fluid gefüllter Spalt und eine oder mehrere Dichtungseinrichtungen vorgesehen, mittels derer das Austreten des Fluids vermieden werden soll. Die Dichtungseinrichtung oder die Dichtungseinrichtungen weisen jeweils einen ersten, mit dem Nabenteil verbundenen Ring sowie jeweils einen mit dem Schwungring verbundenen zweiten Ring auf, sowie jeweils ein Dichtungselement aus einem Kunststoff, insbesondere aus einem Elastomer.

Das Dichtelement ist jeweils einerseits abdichtend zwischen dem ersten Ring und dem Nabenteil und jeweils andererseits zwischen dem zweiten Ring und dem Schwungring angeordnet ist.

Das Dichtelement ist zwischen den miteinander verbundenen Bauteilen, also dem ersten oder zweiten Ring und dem jeweils zugeordneten Schwungring oder Nabenteil verklemmt angeordnet. Die Anordnung des Dichtelements zwischen den beiden vorgenannten Bauteilen bezieht sich insbesondere auf eine Anordnung in einem Schnitt welcher durch die Drehachse des Drehschwingungsdämpfers verläuft.

Durch die Verklemmung zwischen dem jeweiligen Ring und dem weiteren Bauteil des Drehschwingungsdämpfers kann einerseits ein bündiger Abschluss des Rings mit dem Schwungring oder dem Nabenteil erreicht werden und es kann andererseits eine sehr kostengünstige, zeitsparende und hinreichend feste Verbindung der Bauteile ermöglicht werden.

Weitere vorteilhafte Ausgestaltungen sind Gegenstand der Unteransprüche.

Zur Verbesserung der Klemmwirkung ist es von Vorteil, wenn das Dichtelement eine randseitige, vorzugsweise umlaufende, Materialwulst, aufweist.

In gleicher Weise ist es zusätzlich von Vorteil, wenn die Materialwulst in einer Nut, vorzugsweise einer umlaufenden Nut, einliegt.

Die Nut kann vorteilhaft im Schwungring oder Nabenteil angeordnet sein.

Der erste Ring schließt bevorzugt bündig mit dem Nabenteil und/oder der zweite Ring schließt bündig mit Schwungring ab.

Der erste Ring kann vorteilhaft bündig mit dem Nabenteil abschließen. Der zweite Ring kann bündig mit Schwungring abschließen. Dabei liegt das Dichtelement und der Ring in einer Abstufung des Nabenteils und/oder des Schwungrings ein und schließt bündig mit der Außenseite des jeweiligen Nabenteils oder Schwungrings ein.

Die Nut weist bevorzugt einen trapezförmigen Querschnittsbereich auf. Zur besseren Einführung der Materialwulst weist die Nut vorzugsweise einen trapezförmigen Querschnittsbereich auf. Alternativ kann der trapezförmige Querschnitt eine Hinterschneidung ausbilden, so dass die Materialwulst axial mit Bezug auf die Drehachse des Drehschwingungsdämpfers in der Nut gehalten wird.

Die Verbindung zur Verklemmung des Dichtelements kann insbesondere zwischen dem ersten Ring und dem Nabenteil oder zwischen dem zweiten Ring und dem Schwungring durch eines oder mehrere mechanische Verbindungsmittel, insbesondere durch Verschraubung, ausgebildet sein.

Die Verbindung kann alternativ oder zusätzlich zur vorgenannten Variante insbesondere zwischen dem ersten Ring und dem Nabenteil oder zwischen dem zweiten Ring und dem Schwungring durch stoffschlüssige Verbindung, insbesondere Schweißen, ausgebildet sein.

Die Materialwulst kann zur allseitigen Abdichtung ringförmig und vorzugsweise mit kreisrundem oder ovoidalem Querschnitt ausgebildet sein. Diese Dichtung ermöglicht eine breitflächige Auflage an der entsprechenden Dichtfläche der Nut und des Rings.

Alternativ kann die Materialwulst sternförmig, vorzugsweise X-Förmig, ausgebildet sein. Hierdurch werden mehrere Dichtlippen bzw. Dichteebenen geschaffen. Für eine weiter optimierte Halterung der Dichtung bei Einwirkung von radialen Zugkräften ist es von Vorteil, wenn die Form der Materialwulst komplementär zur Form der Nut ausgebildet ist. Der Drehschwingungsdämpfer kann hierfür insbesondere einen Formschluss zwischen Materialwulst und der Nut aufweisen, welcher als Axialanschlag, insbesondere mit einer Hinterschneidung, ausgebildet ist.

Das oder die mechanischen Verbindungsmittel können vorteilhaft als Schrauben, Passbolzen, Buchsen, vorzugsweise Schlitzbuchsen, Nieten und/oder Klammern ausgebildet sein. Die Verbindungsmittel können durch Schrauben, über Presspassung oder auf andere Art und Weise eine Verbindung hergestellt werden.

Weiterhin kann das oder die mechanischen Verbindungsmittel durch eine Öffnung im Dichtelement, insbesondere in der Materialwulst, durchgeführt werden. Es handelt sich um eine Öffnung, die in das Material des ringförmig ausgebildeten Dichtelements eingebracht ist.

Vorzugsweise sind das oder die mechanischen Verbindungsmittel oder die Verschwei-βung außerhalb des Dichtbereichs mit dem Dichtelement angeordnet, so dass es zu keiner Materialschwächung des Dichtelements kommt.

Für eine langlebige Verbindung ist es von Vorteil, wenn die Schweißverbindung als durchgeschweißte Verbindung durch den jeweiligen Ring hindurch ausgebildet ist.

Alternativ oder zusätzlich kann die Schweißverbindung als Oberflächenverschweißung in einem Übergangsbereich zwischen jeweiligen Ring und dem Schwungring oder dem Nabenteil ausgebildet sein.

Das Dichtungselement besteht bevorzugt aus einem Elastomer, besonders bevorzugt aus EPDM oder Silikonmaterial.-

Bevorzugt kann als Elastomer zwischen den jeweils ersten und zweiten Ringen einer Dichtungseinrichtung ein hochtemperaturbeständiges Elastomer, wie z.B. EPDM oder Silikonmaterial verwendet werden. "Silikonmaterial" bedeutet im Rahmen dieser Schrift ein Material, das ein synthetisches Polymer enthält oder ist, bei dem Siliziumatome über Sauerstoffatome verknüpft sind.

Das Dichtungselement kann besonders bevorzugt aus einem anorganisch gefüllten Silikonelastomer bestehen, wobei der Anteil des anorganischen Materials mindestens 30% beträgt. Dies ist besonders zweckmäßig deshalb, weil die genannten Materialien auch in hohen Temperaturbereichen geeignet sind.

Zudem hat das Material geringen Einfluss auf die Lebensdauer von Silikonöl. Umgekehrt ist das Material gegenüber dem Silikonöl beständig und quillt nur gering.

Weiterhin erfindungsgemäß ist Drehschwingungsdämpfer mit einem auf einer Antriebswelle eines Motors befestigbaren Nabenteil (Primärmasse) und einem das Nabenteil im radial äußeren Bereich umfassenden Schwungring (Sekundärmasse), wobei zwischen Nabenteil und Schwungring ein mit einem Fluid gefüllter Spalt und eine oder mehrere Dichtungseinrichtungen vorgesehen sind, mittels derer das Austreten des Fluids vermieden werden soll, wobei die Dichtungseinrichtung oder die Dichtungseinrichtungen jeweils zumindest ein Dichtungselement aus einem Kunststoff aufweisen, welches jeweils einerseits abdichtend an dem Nabenteil und an dem Schwungring angeordnet ist, wobei das Dichtelement mit dem jeweils zugeordneten Schwungring oder Nabenteil durch Formschluss verbunden ist.

Analog wie in der vorherbeschriebenen ersten erfindungsgemäßen Variante erfolgt auch hier die Verbindung zwischen dem Dichtelement und dem Schwungring oder Nabenteil rein mechanisch und insbesondere ohne aufwendiges Galvanisieren.

Das Dichtelement und der Schwungring oder das Nabenteil können vorteilhaft eine jeweils zueinander komplementäre Nut und eine Materialwulst aufweisen, welche den Formschluss bilden.

Der Formschluss kann zwischen der Materialwulst und der Nut als Axialanschlag, insbesondere mit einer Hinterschneidung, ausgebildet sein.

Weitere Merkmale und Vorteile der Erfindung ergeben sich aus weiteren Unteransprüchen und der nachfolgenden Beschreibung zweier Ausführungsbeispiele der Erfindung. Es zeigen:
- Fig. 1: eine schematische teilweise Schnittdarstellung eines Verbindungsbereichs einer ersten und einer zweiten Variante eines erfindungsgemäßen Drehschwingungsdämpfers; welche vorteilhaft auch miteinander kombiniert werden können.
- Fig. 2: eine schematische teilweise Schnittdarstellung eines Verbindungsbereichs einer dritten Variante eines erfindungsgemäßen Drehschwingungsdämpfers;
- Fig. 3: eine schematische teilweise Schnittdarstellung eines Verbindungsbereichs einer vierten Variante eines erfindungsgemäßen Drehschwingungsdämpfers;
- Fig. 4: eine schematische teilweise Schnittdarstellung eines Verbindungsbereichs einer fünften und einer sechsten Variante eines erfindungsgemäßen Drehschwingungsdämpfers; und
- Fig. 5: eine schematische teilweise Schnittdarstellung eines Verbindungsbereichs einer siebten Variante eines erfindungsgemäßen Drehschwingungsdämpfers;
- Fig. 6: eine schematische Teilschnittdarstellung eines Drehschwingungsdämpfers nach dem Stand der Technik;

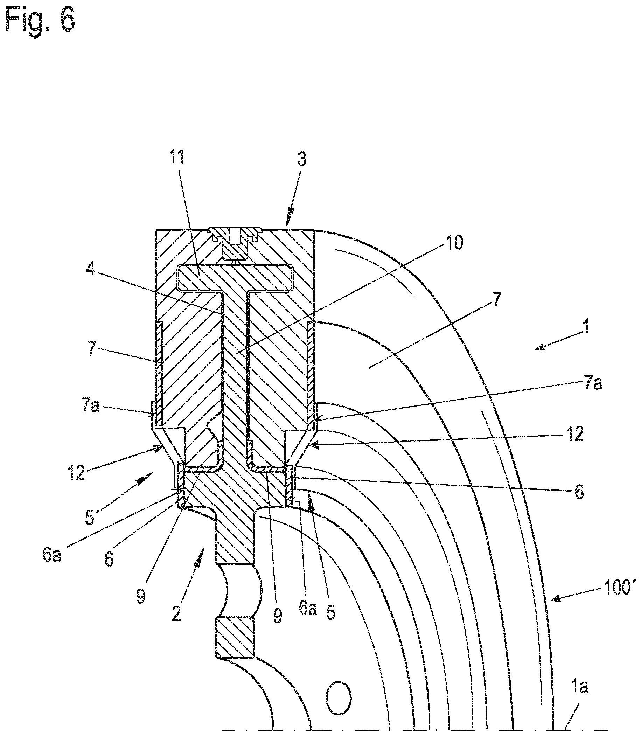

Fig. 6 zeigt einen Drehschwingungsdämpfer 1 aus dem Stand der Technik, den das Dokument DE 10 2020 118 066 A1, auf welches hier verwiesen wird, ausführlich mit Aufbau und Funktion des Drehschwingungsdämpfers beschreibt.

Der Drehschwingungsdämpfer mit einer Drehachse 1a umfasst ein auf einer Antriebswelle eines Motors befestigbares Nabenteil 2 (Primärmasse), einen das Nabenteil 2 im radial äußeren Bereich umfassenden Schwungring 3 (Sekundärmasse), wobei zwischen dem Nabenteil 2 und dem Schwungring 3 ein Spalt 4 vorgesehen ist, welcher mit einem Fluid, vorzugsweise einem Silikonöl, gefüllt ist, und Dichtungseinrichtungen 5' zur Abdichtung des Spaltes 4 nach außen. Es handelt sich dabei um einen außenliegenden Schwungring 3.

Jede Dichtungseinrichtung 5' weist jeweils einen ersten, mit dem Nabenteil 2 dicht verbundenen Ring 6 sowie einem mit dem Schwungring 3 ebenfalls dicht verbundenen zweiten Ring 7 sowie ein Dichtelement 12 aus einem Elastomer oder einem TPE auf, welches einerseits abdichtend mit dem ersten Ring 6 und andererseits abdichtend mit dem zweiten Ring 7 verbunden ist.

Die Ringe 6, 7 bestehen vorzugsweise aus Metall und sind mit dem Nabenteil 2 bzw. dem Schwungring 3 durch ein geeignetes Verbindungsverfahren, insbesondere Schrauben, Schweißen, Kleben, Löten oder dergleichen fest und dicht verbunden.

Der jeweilige aus Kunststoff, insbesondere Elastomer oder TPE, hergestellte Dichtelement 12 ist mit den beiden ersten und zweiten Ringen 6, 7 umlaufend abdichtend verbunden. Als Kunststoff ist auch ein industriell-modifiziertes Naturprodukt zu verstehen, wobei allerdings ein silikonbasiertes Elastomer aufgrund der thermischen Stabilität für die Anwendung bevorzugt ist.

Der Ring 6, Ring 7 und das Dichtungselement 12 bilden eine Baugruppe als Dichtungseinrichtung, die auch als Deckel 100' bezeichnet wird. Der Drehschwingungsdämpfer 1 weist zwei Deckel 100' auf. Der Schwungring 3 ist hier gegenüber dem Nabenteil 2 auf Gleitlagern 9 gelagert, und zwar sowohl radial wie auch axial, wodurch die Größe des Spaltes 4 genau definiert ist.

Der Schwungring 3 besteht aus vorzugsweise zwei Bauteilen, um diesen Schwungring 3 auf dem Nabenteil 2 montieren zu können. Hierbei sind alle bisher bekannten Konstruktionsformen sowie weitere denkbar.

Das Nabenteil 2 ist in den dargestellten Ausführungsbeispielen mit einem radial nach außen vorstehenden Flansch 10 versehen, der im äußeren Randbereich abgeschlossen wird durch einen in Axialrichtung verlaufenden Steg 11, der sich zu beiden Seiten des Flansches 10 hin erstrecken kann, wodurch sich eine T-Form ergibt, aber auch lediglich zu einer Seite des Flansches 10 hin gesehen verlaufen kann, so dass sich ein L-förmiger Querschnitt ergibt. Durch diese Geometrie ist der Schwungring 3 sowohl in Radialrichtung wie auch in Axialrichtung gegenüber dem Nabenteil 2 fixiert, wobei, wie schon erwähnt, durch die Gleitlager 9 die Größe des umlaufenden Spaltes 4 stets definiert ist.

Das aus Kunststoff hergestellte ringförmige Dichtungselement 12 ist an größerflächigen, außen liegenden axialen und radialen Kantenbereichen 6a, 7a der Ringe 6 und 7 gleichzeitig festgelegt. Die Kantenbereiche 6a, 7a sind somit Befestigungsflächen für das Dichtungselement 12. Dies wird unten noch weiter beschrieben.

Jede Dichtungseinrichtung 5' besteht hierbei auch jeweils aus dem ersten, mit dem Nabenteil 2 dicht verbundenen Ring 6, dem mit dem Schwungring 3 ebenfalls dicht verbundenen zweiten Ring 7 sowie dem ringförmigen Dichtungselement 12 aus Kunststoff, welches einerseits abdichtend mit dem ersten Ring 6 und andererseits abdichtend mit dem zweiten Ring 7 verbunden ist.

Dabei überlappen sich der erste Ring 6 und der zweite Ring 7 einer jeweiligen Dichtungseinrichtung 5' in radialer Richtung nicht. Dabei ist der Außendurchmesser des ersten Rings 6 kleiner als der Innendurchmesser des zweiten Rings 7.

Die jeweils ersten und zweiten Ringe 6, 7 der jeweiligen Dichtungseinrichtung 5' sind hier in axial voneinander beabstandeten Ebenen angeordnet. Hierdurch ergibt sich eine einwandfreie und dauerhafte Abdichtung des Spaltbereiches.

Auf diese Weise sind Deckel 100' des erfindungsgemäßen Drehschwingungsdämpfers 1 gebildet, welche jeweils den ersten Ring 6, den zweiten Ring 7 und das Dichtungselement 12 aufweisen.

Das Dichtelement 12 ist mit den beiden ersten und zweiten Ringen 6, 7 umlaufend abdichtend verbunden. Im Stand der Technik ist diese Verbindung durch eine insbesondere während eines Elastomervernetzungsvorganges hergestellte Gummi-Metallverbindung realisierbar.

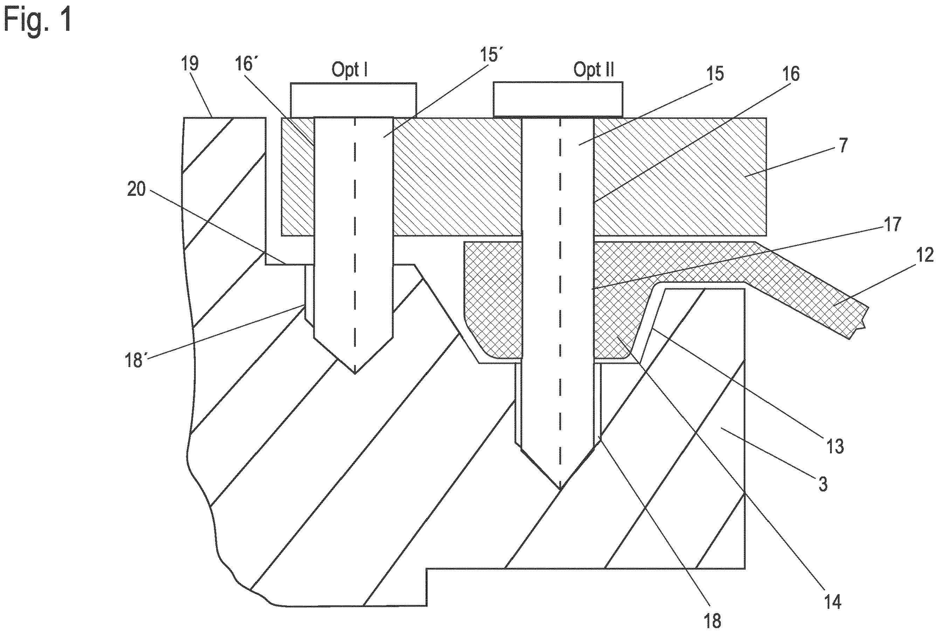

Fig. 1 zeigt dazu eine schematische Schnittansicht eines mehrteiligen Deckels 100 eines erfindungsgemäßen Drehschwingungsdämpfers 1 mit zwei Befestigungsvarianten des Dichtelements 12 mit dem Schwungring 3 in Abwandlung zu Fig. 6. Abgesehen von der Anbindung des Dichtelements 12 zum Nabenteil 2 oder zum Schwungring 3 mittels der Ringe 6 und 7 können die weiteren Bestandteile des Drehschwingungsdämpfers 1 der Fig. 6 identisch übernommen werden.

Fig. 1 zeigt zwei Varianten Opt. 1 und Opt. 2 der Festlegung des Dichtelements 12 am Schwungring 3, welche auch vorteilhaft miteinander kombinierbar sind. In beiden Varianten weist der Schwungring 3 eine Abstufung auf, so dass eine Kontaktbereich 20 mit dem Ring 7 gegenüber einer Außenseite 19 des Schwungrings 3 vertieft und vorzugsweise parallel zu dieser geordnet ist.

Die Abstufung weist zusätzlich zum Kontaktbereich 20 eine vorzugsweise umlaufende Nut 13 auf, in welche eine randseitige Materialwulst 14 des Dichtelements 12 einlegbar ist. Das Dichtelement 12 ist über die Materialwulst in der Nut 13 des Schwungrings 3 verklemmt bzw. klemmend gehalten. Die Abstufung weist einen Schraubkanal 18, 18' auf zur Aufnahme eines Schraubgewindes einer Schraube 15, 15'.

Der äußere Ring 7 überdeckt den Kontaktbereich 20 und die Nut 13 und verklemmt damit das Dichtelement 12. Hierfür weist der Ring 7 Schraubdurchführungen 16, 16' mit oder ohne Gewinde auf. Der Schraubkopf der Schraube 15, 15' kann dabei auch in einer Vertiefung des Rings 7 einliegen, so dass die Schraube 15, 15' bündig mit der Außenseite 19 des Schwungrings 3 und/oder des äußeren Rings 7 abschließt.

Die Nut 13 ist vorzugsweise einen trapezförmigen Querschnitt aufweisen, so dass sich eine bessere Verteilung des Materials der Materialwulst 14 in der Nut durch den Anpressdruck des Rings 7 beim Verschrauben ergibt.

Es versteht sich, dass mehrere Schrauben 15, 15' umfangsverteilt am äußeren Ring 7 angeordnet sind.

Die gleiche Anordnung ergibt sich für die Anbindung des Dichtelements 12 an das Nabenteil 2 durch Verschrauben des inneren Rings 6 mit dem Nabenteil 2 und dadurch Verklemmen einer Materialwulst innerhalb einer Nut, vorzugsweise einer umlaufenden Nut, im Nabenteil 2. Dabei kann die Materialwulst vorteilhaft formgleich zur Materialwulst 12 ausgebildet sein.

In der ersten Variante Opt. 1 erfolgt die Verschraubung des Rings 7 mit dem Schwungring 3 außerhalb des Materials des Dichtelements 12.

In der zweiten Variante Opt. 2 erfolgt die Verschraubung des Rings 7 mit dem Schwungring 3 durch das Material des Dichtelements 12 hindurch. Dabei weist das Dichtelement 12, vorzugsweise die Materialwulst 14, einen eine Schraubdurchführung 17 auf, so dass die Materialwulst zusätzlich zur Verklemmung auch das Material des mechanischen Verbindungsmittels durch das Material des Dichtelements 12 hindurch erstreckt.

Anstelle einer Verschraubung des Dichtelements 12 mit dem Nabenteil 2 und/oder dem Schwungring 3 unter Verwendung von entsprechenden Schrauben sind auch andere Formen der mechanischen Verbindungsmittel, vorzugsweise stiftförmige Verbindungsmittel, besonders bevorzugt Passbolzen, Buchsen, vorzugsweise Schlitzbuchsen, Nieten und/oder Klammern, zur Schaffung einer entsprechenden Verbindung verwendbar.

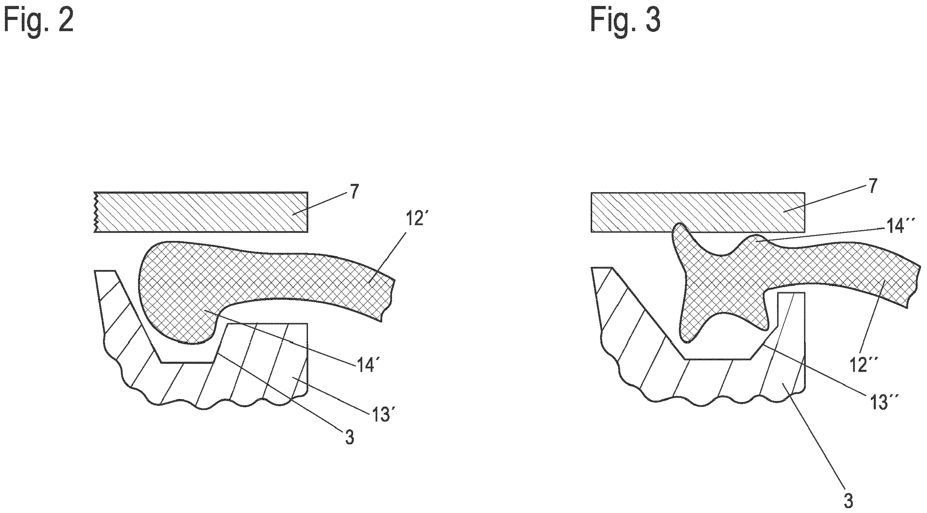

Fig. 2 und 3 zeigt verschiedene Formen der Materialwulst 14' und 14" eines erfindungsgemäßen Dichtelements 12' und 12" in Abwandlung der Variante der Fig. 1. Die Festlegung des Dichtelements kann analog zu Fig. 1 ebenfalls durch eine Verschraubung oder durch andere mechanische Verbindungsmittel erfolgen.

Die Materialwulst 14' liegt in Fig. 2 ebenfalls in einer Nut 13', vorzugsweise einer im äu-βeren Ring 7 umlaufenden Nut, besonders bevorzugt mit trapezförmigem Querschnitt, ein. In der Nut 13' liegt eine Materialwulst in Form eines O-Rings mit einem kreisrunden, im Wesentlichen kreisrunden oder ovoidalen Querschnitt, ein.

Die Materialwulst 14" in Fig. 3 weist einen sternförmigen Querschnitt auf. Die Sternform kann eine regelmäßige oder unregelmäßige Sternform sein. Die Zacken des Sterns ermöglichen eine bessere Verformung des Kunststoffmaterials, vorzugsweise des Elastomermaterials und ein Anlegen des Dichtelements an den Ring 7 und die Nut 13" des Schwungrings 3 im Bereich der Materialwulst 14" an die Wandungen in Form von Dichtlippen. Dadurch ergibt sich eine verbreiterte Dichtfläche und eine Mehrstufigkeit der Dichtung. Die Sternform in Fig. 2 hat in die besonders bevorzugte Form des Buchstaben X.

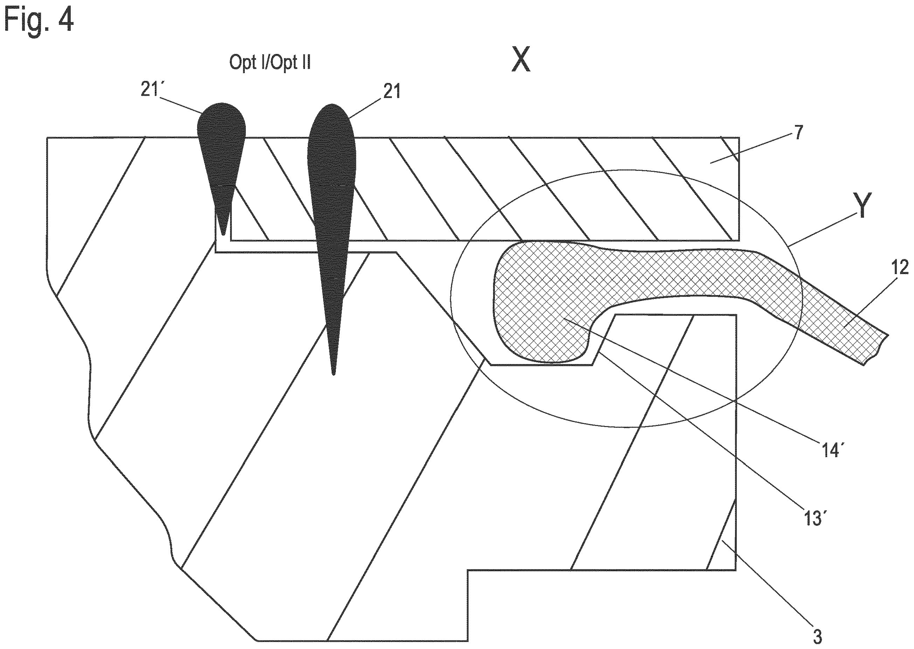

Fig. 4 zeigt eine alternative Verbindung zwischen dem äußeren Ring 7 und dem Schwungring 3, welche alternativ oder zusätzlich auch zwischen dem inneren Ring 6 und dem Nabenteil 2 jeweils unter Verklemmung des Dichtelements 12 eines erfindungsgemäßen Drehschwingungsdämpfers angeordnet sein kann.

Die Verbindung erfolgt alternativ zur Verbindung durch mechanische Verbindungsmittel durch eine stoffschlüssige Verbindung in Form einer Schweißverbindung. Dabei kann die Verschweißung in einem Übergangsbereich zwischen dem äußeren Ring 7 und dem Schwungring 3 durch eine Oberflächenschweißnaht 21' erfolgen.

Alternativ oder zusätzlich kann die Verschweißung zwischen Ring 7 und dem Schwungring 3 durch eine durchgeschweißte Schweißnaht 21 erfolgen. Beide Schweißnähte 21, 21' sind vorzugsweise außerhalb der Nut 14' angeordnet.

Auch die alternativen oder miteinander kombinierbaren Schweißverbindungen Opt. 1 und Opt. 2 der Fig. 4 sind mit den anderen Materialwulst-Geometrien realisierbar. Die Schweißverbindungen können umlaufend angeordnet sein oder weniger bevorzugt als Punktverschweißung. Die umlaufende Materialverschweißung schützt den Dichtungsbereich der Materialwulst von Flüssigkeitsdurchtritt von außen. Die Materialverschweißung bildet dabei eine zusätzliche Dichtebene zu der durch die Materialwulst geschaffene Dichtung aus.

Die in den vorangegangenen Varianten dargestellten Ausführungsvarianten weisen überdies eine Durchführung 24 auf, welche benachbart zur jeweiligen Nut 13-13" angeordnet ist und als ein Spalt zwischen dem jeweiligen Ring 6 oder 7 und dem Nabenteil 2 oder dem Schwungring 3 ausgebildet ist, in welcher ein benachbarter Bereich der Materialwulst 14-14" des Dichtelement 12-12" angeordnet ist. Die Spaltbreite dieser Durchführung ist dabei größer als die Erstreckung des Dichtelements 12-12" innerhalb des Spalts, so dass das Dichtelement 12-12" ein Spiel im Bereich des Spalts aufweist und folglich lastfrei darin angeordnet ist. Dadurch wird die Halterung des Dichtelements nicht überbestimmt und Materialspannungen werden vermieden.

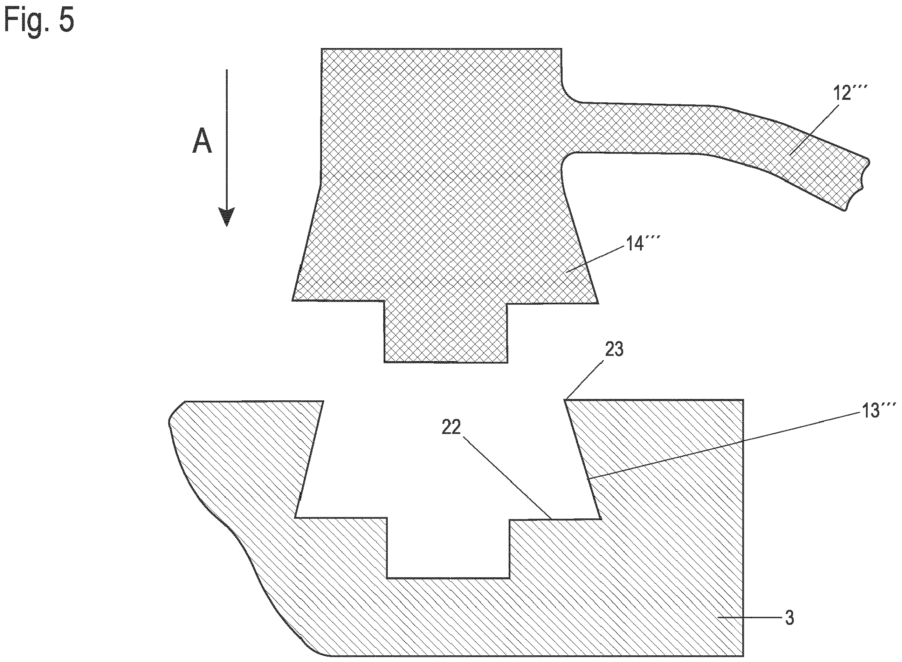

Fig. 5 zeigt eine weitere Variante einer Materialwulst 14‴eines Dichtelements 12‴ in einem erfindungsgemäßen Drehschwingungsdämpfer. Die Materialwulst 14‴ weist eine zur Nut 13‴ komplementäre Form auf. Dabei weist die Nut 13‴ eine Öffnung 23 und eine zum Nutboden 22 hin zulaufende Verbreiterung auf, so dass sich der Nutquerschnitt von der Öffnung 23 zum Nutboden 22 hin verbreitert. Dies wird als Hinterschneidung im Rahmen der vorliegenden Anmeldung bezeichnet.

Durch die komplementäre Form zwischen Materialwulst 14‴ und Nut 13‴ kommt es bei Verbindung der beiden Bereiche zu einem Formschluss mit einer Arretierung beider Elemente gegeneinander umgekehrt zur Einschubrichtung A. Dies erleichtert die Vormontage und die Positionierung des Dichtelements. Weiterhin wird die Halterung des Dichtelements 12‴ bei radialem Zug oder Druck verbessert. Die Befestigung des Dichtelements 12‴ am Schwungring 3 und/oder am Nabenteil 2 kann in diesem Fall, zugunsten einer besonders schnellen und unkomplizierten Montage, ausschließlich durch den Formschluss erfolgen, ohne dass ein zusätzliches Verklemmen notwendig ist. Somit kann bei dieser Variante der Fig. 5 sowohl der äußere Ring 7 als auch der inneren Ring 6 vorteilhaft entfallen. Das Material des Dichtelements 12‴ kann dem Material der vorhergehenden Ausführungsvarianten entsprechen.

### BEZUGSZEICHEN

- 1: Drehschwingungsdämpfer
- 1a: Drehachse
- 2: Nabenteil
- 3: Schwungring
- 4: Spalt
- 5': Dichtungseinrichtung
- 6: Ring
- 6a: Kantenbereich
- 7: Ring
- 7a: Kantenbereich
- 9: Gleitlager
- 10: Flansch
- 11: Steg
- 12, 12', 12", 12‴: Dichtungselement
- 13, 13', 13", 13‴: Nut
- 14, 14', 14", 14‴: Materialwulst
- 15, 15': mechanische Verbindungsmittel
- 16, 16': Schraubdurchführung
- 17: Schraubdurchführung
- 18, 18': Schraubkanal
- 19: Außenseite
- 20: Kontaktbereich
- 21, 21': Schweißnaht
- 22: Nutboden
- 23: Öffnung
- 24: Durchführung
- 100`: Deckel

## Patentansprüche

1. Drehschwingungsdämpfer (1) mit einem auf einer Antriebswelle eines Motors befestigbaren Nabenteil (2) (Primärmasse) und einem das Nabenteil (2) im radial äußeren Bereich umfassenden Schwungring (3) (Sekundärmasse), wobei zwischen Nabenteil (2) und Schwungring (3) ein mit einem Fluid gefüllter Spalt (4) und eine oder mehrere Dichtungseinrichtungen (5) vorgesehen sind, mittels derer das Austreten des Fluids vermieden werden soll, wobei die Dichtungseinrichtung oder die Dichtungseinrichtungen (5) jeweils einen ersten, mit dem Nabenteil (2) verbundenen Ring (6) sowie jeweils einen mit dem Schwungring (3) verbundenen zweiten Ring (7) sowie jeweils ein Dichtungselement (12, 12', 12") aus einem Kunststoff aufweisen, welches jeweils einerseits abdichtend zwischen dem ersten Ring (6) und dem Nabenteil (2) und jeweils andererseits mit dem zweiten Ring (7) und dem Schwungring (3) angeordnet ist, **dadurch gekennzeichnet, dass** das Dichtelement (12, 12', 12") zwischen den miteinander verbundenen Bauteilen, also dem ersten oder zweiten Ring (6 oder 7) und dem jeweils zugeordneten Schwungring (3) oder Nabenteil (2) verklemmt angeordnet ist.

2. Drehschwingungsdämpfer nach Anspruch 1, **dadurch gekennzeichnet, dass** Dichtelement (12, 12', 12", 12‴) eine randseitige, vorzugsweise umlaufende, Materialwulst (14, 14', 14", 14‴) aufweist.

3. Drehschwingungsdämpfer nach Anspruch 2, **dadurch gekennzeichnet, dass** die Materialwulst (14, 14', 14", 14‴) in einer Nut (13, 13', 13", 13‴), vorzugsweise einer umlaufenden Nut, einliegt.

4. Drehschwingungsdämpfer nach Anspruch 3, **dadurch gekennzeichnet, dass** die Nut (13, 13', 13", 13‴) im Schwungring (3) oder Nabenteil (2) oder dass jeweils eine Nut (13, 13', 13", 13‴) nach Anspruch 3 im Schwungring (3) und im Nabenteil (2) angeordnet ist.

5. Drehschwingungsdämpfer nach einem der vorhergehenden Ansprüche, **dadurch gekennzeichnet, dass** die Verbindung zwischen dem ersten Ring (6) und dem Nabenteil (2) oder zwischen dem zweiten Ring (7) und dem Schwungring (3) durch eines oder mehrere mechanische Verbindungsmittel (15, 15'), insbesondere durch Verschraubung, erfolgt oder
**dass** die Verbindung zwischen dem ersten Ring (6) und dem Nabenteil (2) oder zwischen dem zweiten Ring (7) und dem Schwungring (3) durch stoffschlüssige Verbindung, insbesondere Schweißen, erfolgt.

6. Drehschwingungsdämpfer nach einem der vorhergehenden Ansprüche, **dadurch gekennzeichnet, dass** die Materialwulst (14, 14') ringförmig und vorzugsweise mit kreisrundem oder ovoidalem Querschnitt ausgebildet ist oder
**dass** die Materialwulst (14") sternförmig, vorzugsweise X-Förmig, ausgebildet ist.

7. Drehschwingungsdämpfer nach einem der vorhergehenden Ansprüche, **dadurch gekennzeichnet, dass** die Form der Materialwulst (14‴) komplementär zur Form der Nut (13‴) ausgebildet ist.

8. Drehschwingungsdämpfer nach einem der vorhergehenden Ansprüche, **dadurch gekennzeichnet, dass** das oder die mechanischen Verbindungsmittel (15) durch eine Öffnung (17) im Dichtelement (12, 12', 12", 12‴), insbesondere in der Materialwulst (14, 14', 14", 14‴), durchgeführt ist.

9. Drehschwingungsdämpfer nach einem der vorhergehenden Ansprüche, **dadurch gekennzeichnet, dass** das oder die mechanischen Verbindungsmittel (15') oder die Verschweißung (21') außerhalb des Dichtbereichs mit dem Dichtelement (12) erfolgt.

10. Drehschwingungsdämpfer nach einem der vorhergehenden Ansprüche, **dadurch gekennzeichnet, dass** die Schweißverbindung (21, 21') als durchgeschweißte Verbindung durch den jeweiligen Ring (6, 7) hindurch ausgebildet ist.

11. Drehschwingungsdämpfer nach einem der vorhergehenden Ansprüche, **dadurch gekennzeichnet, dass** die Schweißverbindung (21') als Oberflächenverschwei-βung in einem Übergangsbereich zwischen jeweiligen Ring (6, 7) und dem Schwungring (3) oder dem Nabenteil (2) ausgebildet ist.

12. Drehschwingungsdämpfer nach einem der vorhergehenden Ansprüche, **dadurch gekennzeichnet, dass** der Drehschwingungsdämpfer benachbart zur Nut (13-13") eine Durchführung (24) aufweist, wobei die Spaltbreite dieser Durchführung (24) größer ist als die Erstreckung des Dichtelements (12-12") innerhalb der Durchführung (24),

13. Drehschwingungsdämpfer (1) mit einem auf einer Antriebswelle eines Motors befestigbaren Nabenteil (2) (Primärmasse) und einem das Nabenteil (2) im radial äußeren Bereich umfassenden Schwungring (3) (Sekundärmasse), wobei zwischen Nabenteil (2) und Schwungring (3) ein mit einem Fluid gefüllter Spalt (4) und eine oder mehrere Dichtungseinrichtungen (5) vorgesehen sind, mittels derer das Austreten des Fluids vermieden werden soll, wobei die Dichtungseinrichtung oder die Dichtungseinrichtungen (5) jeweils zumindest ein Dichtungselement (12‴) aus einem Kunststoff aufweisen, welches jeweils einerseits abdichtend an dem Nabenteil (2) und an dem Schwungring (3) angeordnet ist, **dadurch gekennzeichnet, dass** das Dichtelement (12‴) mit dem jeweils zugeordneten Schwungring (3) oder Nabenteil (2) durch Formschluss verbunden ist.

14. Drehschwingungsdämpfer nach Anspruch 13, **dadurch gekennzeichnet, dass** das Dichtelement (12‴) und der Schwungring (3) oder das Nabenteil (2) eine jeweils zueinander komplementäre Nut (13‴) und eine Materialwulst (14‴) aufweisen, welche den Formschluss bilden.

15. Drehschwingungsdämpfer nach einem der vorhergehenden Ansprüche, **dadurch gekennzeichnet, dass** der Formschluss zwischen Materialwulst (14‴) und der Nut (13‴) als Axialanschlag, insbesondere mit einer Hinterschneidung, ausgebildet ist.
